# FASCICULE DE BREVET EUROPEEN

(11) **EP 4 281 689 B1**
(45) Date de publication et mention de la délivrance du brevet: **19.11.2025**
(21) Numéro de dépôt: 22702504.6
(22) Date de dépôt: 07.01.2022
(51) Int. Cl.: F16H 57/039, F16H 57/04

(54) **BOITIER DE TRANSMISSION ET ENGIN ROULANT EQUIPE D'UN TEL BOITIER DE TRANSMISSION**
GETRIEBEGEHÄUSE UND RADFAHRZEUG MIT SOLCH EINEM GETRIEBEGEHÄUSE
TRANSMISSION HOUSING AND WHEELED VEHICLE PROVIDED WITH SUCH A TRANSMISSION HOUSING

(30) Priorité: 25.01.2021 FR 2100656
(43) Date de publication de la demande: 29.11.2023
(73) Titulaire: France Reducteurs, 85500 Les Herbiers (FR)
(72) Inventeur: ROUSSELOT, Rémi, 85500 LES HERBIERS (FR)
(74) Mandataire: Ipsilon
(86) Numéro de dépôt international: PCT/FR2022/050037
(87) Numéro de publication internationale: WO 2022/157438

(56) Documents cités:
- WO-A1-2018/015633
- JP-A- 2005 170 132
- US-A1- 2020 355 257

## Description

La présente invention concerne un boîtier de transmission ainsi qu'un engin roulant, tel qu'une tondeuse à gazon, équipé d'un tel boîtier de transmission.

Elle concerne en particulier un boîtier de transmission présentant un corps formé d'au moins deux coquilles délimitant, à l'état assemblé par un plan de joint, une enceinte apte à être remplie au moins partiellement de lubrifiant, ce boîtier étant configuré pour recevoir, logés au moins partiellement à l'intérieur du boîtier, au moins un arbre d'entrée rotatif présentant un axe longitudinal et un arbre de sortie auquel le mouvement de rotation du ou d'au moins l'un des arbres d'entrée est apte à être transmis, cet arbre d'entrée rotatif comprenant une extrémité dite menante accessible depuis l'extérieur du boîtier pour permettre l'entraînement en rotation dudit arbre d'entrée et une portion filetée pour former une vis sans fin, ledit arbre d'entrée portant un roulement comprenant une bague intérieure entourant ledit arbre d'entrée et une bague extérieure coaxiales et des organes de roulement disposés entre lesdites bagues, ledit roulement étant disposé sur l'arbre d'entrée entre la portion filetée et l'extrémité menante dudit arbre d'entrée, ledit boîtier ménageant à l'intérieur de l'enceinte un emplacement de réception de ce roulement et un emplacement de réception de la portion filetée.

Un tel boîtier de transmission est connu comme l'illustre le document FR3 072 432. Des boîtiers sont également connus à travers les documents JP 2005 170132, US 2020/355257 et WO 2018/015633. Il existe un besoin permanent pour ce type de boîtier d'accroître les performances ou la qualité de tels boîtiers sans augmenter l'encombrement ou le nombre de pièces de ces boîtiers.

Un but de l'invention est de proposer un boîtier de transmission dont les performances et la qualité du boîtier de transmission sont accrues sans augmenter le nombre de pièces dudit boîtier.

A cet effet, l'invention a pour objet un boîtier de transmission présentant un corps formé d'au moins deux coquilles délimitant à l'état assemblé par un plan de joint une enceinte apte à être remplie au moins partiellement de lubrifiant, ce boîtier étant configuré pour recevoir, logés au moins partiellement à l'intérieur du boîtier, au moins un arbre d'entrée rotatif présentant un axe longitudinal et un arbre de sortie auquel le mouvement de rotation du ou d'au moins l'un des arbres d'entrée est apte à être transmis, cet arbre d'entrée rotatif comprenant une extrémité dite menante accessible depuis l'extérieur du boîtier pour permettre l'entraînement en rotation dudit arbre d'entrée et une portion filetée pour former une vis sans fin, ledit arbre d'entrée portant un roulement comprenant une bague intérieure entourant ledit arbre d'entrée et une bague extérieure coaxiales et des organes de roulement disposés entre lesdites bagues, ledit roulement étant disposé sur l'arbre d'entrée entre la portion filetée et l'extrémité menante dudit arbre d'entrée, ledit boîtier ménageant à l'intérieur de l'enceinte un emplacement de réception de ce roulement et un emplacement de réception de la portion filetée, caractérisé en ce que le boîtier comprend une barrière disposée entre lesdits emplacements, cette barrière s'étendant de manière continue ou discontinue autour dudit arbre d'entrée en ménageant un passage traversant formant le passage d'accès de l'arbre d'entrée d'un emplacement à l'autre, cette barrière étant formée en au moins deux parties portées l'une, par l'une des coquilles, l'autre, par l'autre des coquilles, chaque partie de barrière étant réalisée d'une seule pièce avec la coquille associée, au moins l'une des parties de barrière étant conformée pour ménager un ou plusieurs déflecteurs, le ou au moins l'un des déflecteurs étant formé au moins partiellement par une surface inclinée à pente descendante depuis le corps du boîtier en direction de l'arbre d'entrée, à l'état positionné verticalement de l'arbre d'entrée avec le roulement s'étendant au-dessus de la portion filetée de l'arbre d'entrée. Grâce à la présence de cette barrière, la qualité de l'étanchéité au niveau du roulement est améliorée et les risques d'un passage du lubrifiant à travers le roulement sont réduits. La conception de la barrière permet d'améliorer l'étanchéité sans avoir à rapporter de joint d'étanchéité. La présence d'une telle barrière permet de limiter la projection de lubrifiant en direction du roulement, cette projection étant favorisée par le sens de rotation de la vis sans fin. La présence au niveau de la barrière d'une ou plusieurs surfaces inclinées en direction de l'arbre d'entrée permet de guider les projections de lubrifiant résultant notamment de la rotation de l'arbre d'entrée vers l'arbre d'entrée.

Selon un mode de réalisation de l'invention, lesdits déflecteurs d'au moins l'une des parties de barrière étant au nombre de deux et étant formés chacun au moins partiellement par une surface inclinée à pente descendante depuis le corps du boîtier en direction de l'arbre d'entrée, à l'état positionné verticalement de l'arbre d'entrée avec le roulement s'étendant au-dessus de la portion filetée de l'arbre d'entrée, ces déflecteurs présentent une zone de jonction présentant un profil en V. La multiplication des surfaces inclinées permet d'améliorer le guidage du lubrifiant.

Selon un mode de réalisation de l'invention, lesdits déflecteurs d'au moins l'une des parties de barrière étant au nombre de deux et étant formés chacun au moins partiellement par une surface inclinée à pente descendante depuis le corps du boîtier en direction de l'arbre d'entrée, à l'état positionné verticalement de l'arbre d'entrée avec le roulement s'étendant au-dessus de la portion filetée de l'arbre d'entrée, ces déflecteurs sont non jointifs et l'un des déflecteurs s'étend au moins partiellement au-dessus de l'autre déflecteur. La réalisation de déflecteurs non jointifs permet la réalisation d'une barrière discontinue ce qui favorise l'écoulement du lubrifiant en direction de la partie dite de fond du boîtier logeant l'extrémité de l'arbre d'entrée opposée à l'extrémité menante dudit arbre d'entrée. Le décalage axial d'au moins une partie des déflecteurs peut permettre le guidage du lubrifiant depuis un déflecteur vers un autre déflecteur à la manière de rampes inclinées en cascade.

Selon un mode de réalisation de l'invention, lesdits déflecteurs d'au moins l'une des parties de barrière étant au nombre de deux et l'un des déflecteurs étant formé au moins partiellement par une surface inclinée à pente descendante depuis le corps du boîtier en direction de l'arbre d'entrée à l'état positionné verticalement de l'arbre d'entrée avec le roulement s'étendant au-dessus de la portion filetée de l'arbre d'entrée, l'autre déflecteur est formé au moins partiellement par une surface s'étendant orthogonalement à l'axe longitudinal de l'arbre d'entrée.

Selon un mode de réalisation de l'invention, au moins l'un des déflecteurs présente, pour la délimitation du passage traversant de la barrière, une partie en arc de cercle de centre disposé sur l'axe longitudinal de l'arbre d'entrée. De préférence, chaque déflecteur présente pour la délimitation du passage traversant de la barrière une portion en arc de cercle de sorte que le passage traversant est de forme circulaire en projection orthogonale sur un plan perpendiculaire à l'arbre d'entrée.

Selon un mode de réalisation de l'invention, au moins l'un des déflecteurs forme un secteur annulaire, ce secteur annulaire qui forme une partie de disque étant délimité par deux arcs de cercle concentriques et deux rayons, l'un des arcs de cercle formant la partie en arc de cercle du déflecteur servant à la délimitation du passage traversant de la barrière, l'autre arc de cercle formant une zone de raccordement du déflecteur au corps du boîtier.

Selon un mode de réalisation de l'invention, à l'état assemblé des coquilles du boîtier, le passage traversant ménagé par la barrière, vu depuis l'extérieur du boîtier, a une forme circulaire ou ovoïde et a, en projection orthogonale dans un plan perpendiculaire à l'axe longitudinal de l'arbre d'entrée, une circonférence de dimension supérieure à la circonférence de l'arbre d'entrée. Un espace libre est ainsi ménagé entre la barrière et l'arbre d'entrée. Cette conception limite les risques de remontée du lubrifiant en direction du roulement.

Selon un mode de réalisation de l'invention, le plan de joint des coquilles passe par l'axe longitudinal de l'arbre d'entrée et s'étend perpendiculairement à l'arbre de sortie.

Selon un mode de réalisation de l'invention, la barrière présente un plan de symétrie confondu avec le plan de joint des coquilles. Il en résulte une simplicité de fabrication.

Selon un mode de réalisation de l'invention, le boîtier est configuré pour recevoir, une roue dentée montée sur l'arbre de sortie et en prise par engrènement avec la portion filetée de l'arbre d'entrée et au moins une partie de la surface inclinée à pente descendante depuis le corps du boîtier en direction de l'arbre d'entrée d'au moins l'un des déflecteurs, à l'état positionné verticalement de l'arbre d'entrée avec le roulement s'étendant au-dessus de la portion filetée de l'arbre d'entrée forme un écran antiprojections disposé entre la roue dentée et le roulement et s'étend dans un plan parallèle à un plan tangentant ladite roue dentée. Cette disposition permet de briser une partie du flux de lubrifiant crée par la roue dentée sous l'effet de la rotation de la roue dentée et d'empêcher ce flux d'être projeté directement sur le roulement.

L'invention a encore pour objet un engin roulant, tel qu'une tondeuse à gazon, caractérisé en ce qu'il est équipé d'un boîtier de transmission conforme à celui décrit ci-dessus.

### Brève description des dessins

L'invention sera bien comprise à la lecture de la description suivante d'exemples de réalisation, en référence aux dessins annexés dans lesquels :
[Fig. 1] représente une vue en perspective d'un engin équipé d'un boîtier de transmission conforme à l'invention ;
[Fig. 2] représente une vue d'un boîtier de transmission en position éclatée des éléments le constituant ;
[Fig. 3] représente une vue partielle de dessus d'un boîtier de transmission conforme à l'invention, l'arbre d'entrée ayant été omis ;
[Fig. 4] représente une vue partiellement en coupe d'un boîtier de transmission conforme à l'invention ;
[Fig. 5] représente une vue partielle du boîtier de transmission de la figure 4 ;
[Fig. 6] représente une vue partielle en perspective du boîtier de transmission de la figure 4 à l'état non assemblé des coquilles du boîtier ;
[Fig. 7] représente une vue partielle du boîtier de transmission de la figure 6 une partie de l'une des coquilles ayant été omise pour voir l'intérieur du boîtier de transmission ;
[Fig. 8] représente une vue partielle du boîtier de transmission de la figure 4, une partie de l'une des coquilles ayant été omise pour voir l'intérieur du boîtier de transmission ;
[Fig. 9] représente une vue partielle en coupe d'un boîtier de transmission à déflecteurs jointifs ;
[Fig. 10] représente une vue en perspective du boîtier de transmission de la figure 9 à l'état non assemblé des coquilles du boîtier ;
[Fig. 11] représente une vue en perspective du boîtier de transmission de la figure 9 avec un arbre d'entrée, une partie de l'une des coquilles ayant été omise pour voir l'intérieur du boîtier de transmission ;
[Fig. 12] représente une vue de l'intérieur d'une coquille d'un boîtier de transmission ;
[Fig. 13] représente une vue en perspective d'un boîtier de transmission, une partie de l'une des coquilles ayant été omise pour voir l'intérieur du boîtier de transmission ;
[Fig. 14] représente une vue en perspective de l'intérieur de la coquille de la figure 12.

Comme mentionné ci-dessus, le boîtier 1 de transmission, objet de l'invention, est plus particulièrement destiné à s'appliquer à un engin 21 moteur roulant, tel qu'une tondeuse à gazon ou un chasse-neige de préférence à conducteur marchant bien que le conducteur puisse être également embarqué sur l'engin.

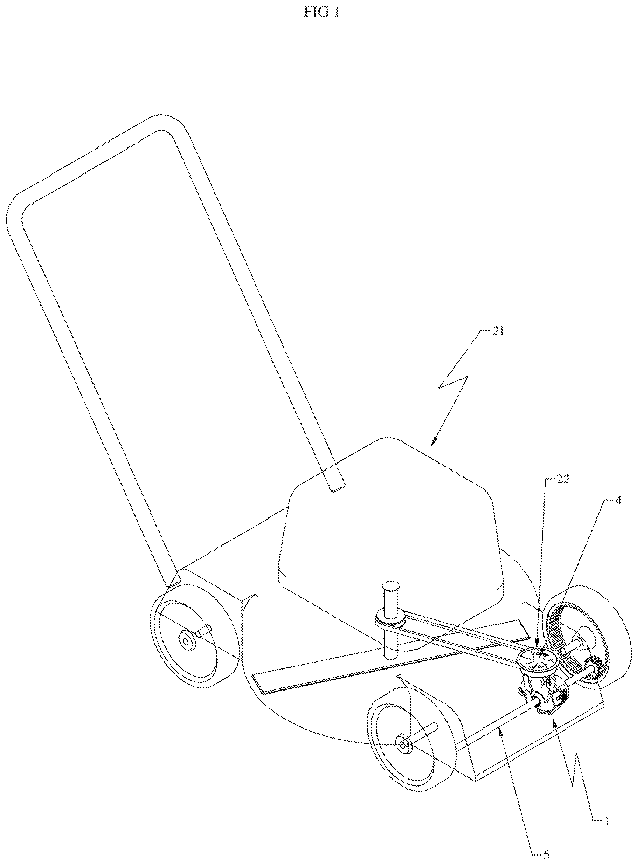

La figure 1 représente l'application d'un tel boîtier 1 de transmission à une tondeuse à gazon. Cette tondeuse à gazon comporte un châssis roulant, les roues avant dudit châssis étant ici des roues motrices aptes à être entraînées en rotation à l'aide du boîtier 1 de transmission de l'invention. Bien évidemment, en variante, le boîtier 1 de transmission peut permettre de manière équivalente l'entraînement en rotation des roues arrière de l'engin 21.

Le boîtier 1 de transmission est ici un boîtier 1 de transmission en matière de synthèse, de préférence réalisé par moulage par injection. Ce boîtier 1 de transmission présente un corps 2 formé de deux coquilles 2A et 2B assemblées par un plan de joint représenté en P aux figures. Généralement, ces coquilles 2A, 2B sont maintenues assemblées au moins par collage à l'aide d'un cordon de colle disposé au niveau du plan de joint. Ces coquilles 2A, 2B délimitent, à l'état assemblé, une enceinte 3 apte à être remplie au moins partiellement de lubrifiant tel que de la graisse ou de l'huile.

Ce boîtier 1 de transmission est configuré pour recevoir, logé, au moins partiellement à l'intérieur du boîtier 1, au moins un arbre 4 d'entrée rotatif avec un axe longitudinal et un arbre 5 de sortie auquel le mouvement de rotation de l'arbre 4 d'entrée est apte à être transmis. L'arbre 4 d'entrée est ici réalisé en métal. Cet arbre 4 d'entrée comprend une extrémité 6, dite menante, accessible depuis l'extérieur du boîtier 1 pour permettre l'entraînement en rotation dudit arbre 4 d'entrée, et une extrémité opposée logée à l'intérieur du boîtier dans un palier du boîtier au niveau de la partie formant le fond du boîtier 1.

L'extrémité 6 menante est destinée à être couplée à un organe 22 d'entraînement en rotation de l'arbre 4 d'entrée. Cet organe 22 d'entraînement en rotation peut être un moteur électrique, une poulie de transmission sans fin motorisée comme dans l'exemple représenté ou autre.

L'arbre 4 d'entrée comprend encore une portion 7 filetée disposée à l'intérieur du boîtier 1 de transmission pour former une vis sans fin. Cette portion 7 filetée de l'arbre 4 d'entrée vient en prise par engrènement avec une roue 20 dentée logée à l'intérieur du boîtier et montée sur l'arbre 5 de sortie. Cette roue 20 dentée peut être solidaire ou solidarisable en rotation avec l'arbre 5 de sortie.

L'arbre 5 de sortie forme l'arbre d'entraînement en rotation des roues de l'engin 21. Le mouvement de rotation de l'organe 22 d'entraînement de l'arbre 4 d'entrée est transmis à l'arbre 4 d'entrée qui lui-même, par sa portion filetée, transmet le mouvement de rotation à la roue 20 dentée. Celle-ci transmet, à l'état solidarisé en rotation avec l'arbre 5 de sortie, son mouvement de rotation à l'arbre 5 de sortie pour permettre l'entraînement en rotation des roues de l'engin.

Il doit être noté que la roue 20 dentée peut être solidaire en rotation de manière permanente avec l'arbre 5 de sortie ou peut être solidarisable en rotation avec l'arbre 5 de sortie, par exemple par déplacement axial du boîtier 1.

Dans les exemples représentés, l'arbre 5 de sortie est disposé orthogonalement à l'arbre 4 d'entrée. Le plan P de joint des coquilles 2A, 2B passe par l'axe longitudinal de l'arbre 4 d'entrée et s'étend perpendiculairement à l'arbre 5 de sortie.

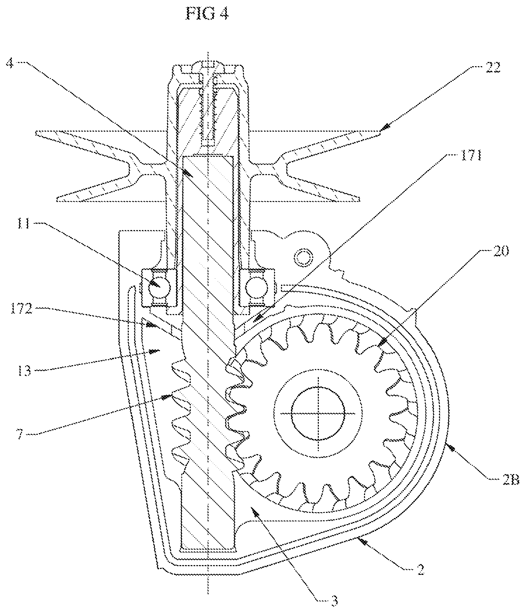

L'arbre 4 d'entrée est encore équipé d'un roulement 8. Ce roulement 8 peut être monté sur l'arbre 4 d'entrée à l'aide d'un corps tubulaire interposé entre le roulement 8 et l'arbre 4 d'entrée comme décrit dans le brevet FR 3 072 432, le corps tubulaire étant maintenu solidaire en rotation de l'arbre 4 d'entrée par le roulement 8. Ce roulement 8 comprend une bague 9 intérieure entourant ledit arbre 4 d'entrée et, dans l'exemple représenté, par exemple à la figure 4, le corps tubulaire pour former une bague constrictrice emmanchée à force sur le corps tubulaire et maintenant ce corps tubulaire solidaire en rotation de l'arbre 4 d'entrée. Bien évidemment, tout autre montage de solidarisation en rotation de la bague 9 intérieure du roulement 8 et de l'arbre 4 d'entrée peut être envisagé sans sortir du cadre de l'invention.

Le roulement 8 comprend encore une bague 10 extérieure coaxiale avec la bague 9 intérieure et des organes 11 de roulement, tels que des billes ou des aiguilles ou autre, disposés entre lesdites bagues intérieure 9 et extérieure 10. La bague 10 extérieure du roulement 8 est maintenue dans un logement du boîtier formé par les coquilles à l'état assemblé. Le roulement 8 est ainsi disposé sur l'arbre 4 d'entrée entre la portion 7 filetée et l'extrémité 6 menante dudit arbre 4 d'entrée.

Le boîtier 1 de transmission est configuré pour ménager donc à l'intérieur du boîtier 1 un emplacement 12 de réception de ce roulement 8 et un emplacement 13 de réception de la portion 7 filetée. Pour empêcher le lubrifiant de venir se positionner sur les organes de roulement du roulement 8 et passer à travers le roulement en direction de l'extérieur du boîtier 1 de transmission, le boîtier 1 de transmission comprend une barrière 14 disposée entre lesdits emplacements 12 et 13 décrits ci-dessus. Cette barrière 14 s'étend donc au moins partiellement au-dessus de la portion 7 filetée de l'arbre 4 d'entrée à l'état positionné verticalement de l'arbre 4 d'entrée avec le roulement 8 s'étendant au-dessus de la portion 7 filetée de l'arbre 4 d'entrée. Cette barrière 14 peut affecter un grand nombre de formes.

Indépendamment de sa forme, cette barrière 14 s'étend, de manière continue ou discontinue, autour dudit arbre 4 d'entrée en ménageant un passage 15 traversant formant le passage d'accès de l'arbre 4 d'entrée d'un emplacement à l'autre.

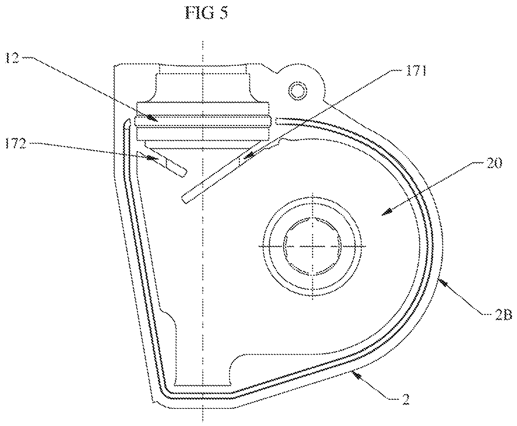

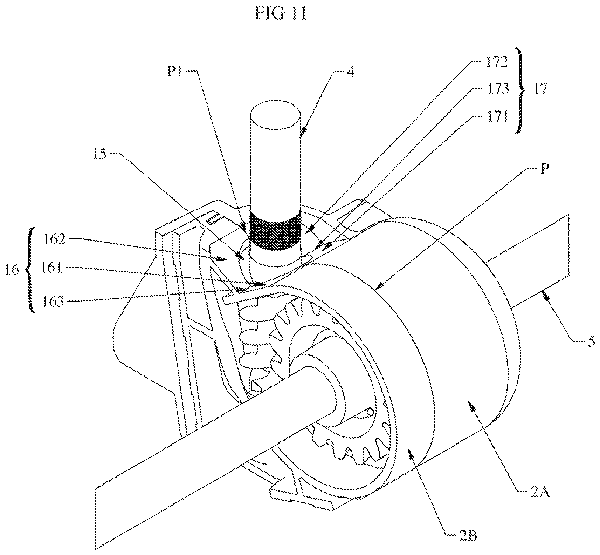

Cette barrière 14 est donc une barrière entourant l'arbre 4 d'entrée en délimitant une surface continue autour dudit arbre 4 d'entrée comme illustré à la figure 11 ou discontinue comme illustré à la figure 5. Cette barrière 14 ménage un passage 15 traversant formant le passage d'accès, c'est-à-dire le passage à travers lequel l'arbre 4 d'entrée passe d'un emplacement à l'autre. Ce passage 15 traversant est donc traversé par l'arbre 4 d'entrée qui s'étend ainsi de part et d'autre de la barrière 14.

Cette barrière 14 est formée en moins deux parties représentés en 16 et 17 aux figures. Ces deux parties sont portées, l'une, représentée en 16 par la coquille 2A, l'autre, représentée en 17 par l'autre coquille 2B. Chaque partie 16 ou 17 de barrière est réalisée d'une seule pièce avec la coquille 2A ou 2B associée. Ainsi, la partie 16 de barrière est réalisée d'une seule pièce avec la coquille 2A, tandis que la partie 17 de barrière est réalisée d'une seule pièce avec la coquille 2B. Au moins l'une des parties 16 ou 17 de barrière, est conformée pour ménager un ou plusieurs déflecteurs.

Dans les exemples représentés, la partie 16 de barrière portée par la coquille 2A est conformée pour ménager deux déflecteurs représentés en 161 et 162 aux figures, tandis que la partie 17 de barrière portée par la coquille 2B est conformée pour ménager deux déflecteurs représentés en 171 et 172 aux figures. Ces déflecteurs peuvent affecter un grand nombre de formes. Ainsi, l'un des déflecteurs d'au moins une partie de barrière, de préférence, de chaque partie 16 ou 17 de barrière est formé au moins partiellement par une surface inclinée à pente descendante depuis le corps 2 du boîtier 1 en direction de l'arbre 4 d'entrée à l'état positionné verticalement de l'arbre 4 d'entrée avec le roulement 8 s'étendant au-dessus de la portion 7 filetée de l'arbre 4 d'entrée. Cette conformation permet un guidage de l'écoulement gravitaire du lubrifiant.

Dans les exemples représentés, les déflecteurs d'au moins l'une, en l'occurrence, de chacune des parties de barrière, sont au nombre de deux par partie de barrière.

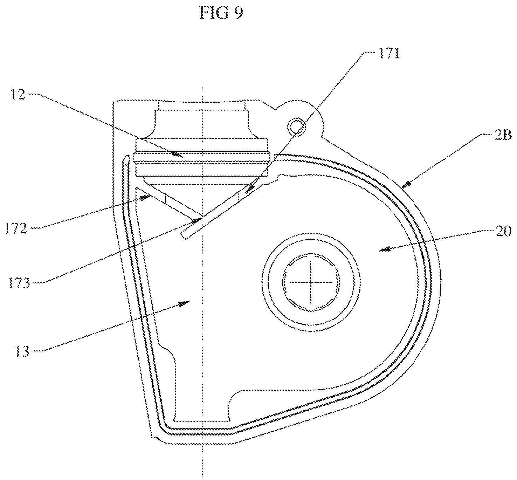

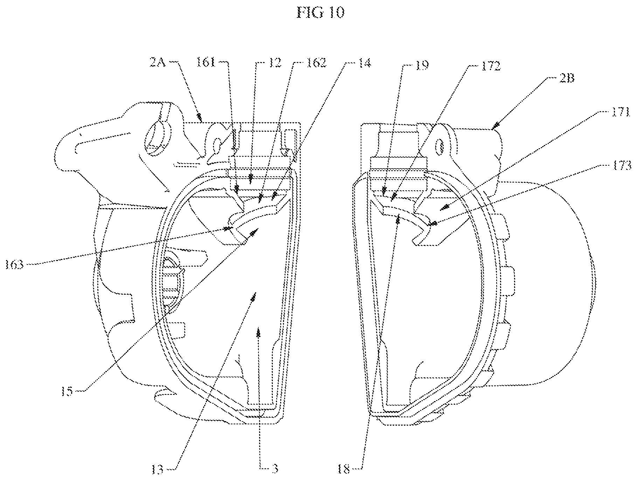

Dans l'exemple représenté aux figures 9 à 11, les déflecteurs 161 et 162 de la partie 16 de barrière sont formés chacun au moins partiellement par une surface inclinée à pente descendante depuis le corps 2 du boîtier 1 en direction de l'arbre 4 d'entrée à l'état positionné verticalement de l'arbre 4 d'entrée avec le roulement 8 s'étendant au-dessus de la portion 7 filetée de l'arbre d'entrée. Il en est de même des déflecteurs 171 et 172 de la partie 17 de barrière.

Ces déflecteurs 161 et 162 ou 171 et 172 d'une même partie de barrière présentent une zone de jonction avec un profil en V. Ainsi, la zone de jonction des déflecteurs 161 et 162 de la partie 16 de barrière est représentée en 163 aux figures, tandis que la zone de jonction des déflecteurs 171 et 172 de la partie 17 de barrière est représentée en 173 aux figures. Les déflecteurs 161 et 162 de la partie 16 de barrière sont respectivement accolés aux déflecteurs 171 et 172 de la partie 17 de barrière à l'état assemblé des coquilles par leur plan de joint. Ce plan de joint des déflecteurs d'une partie de barrière à une autre est représenté en P1 aux figures.

On note que, dans les exemples représentés, la barrière 14 présente un plan P1 de symétrie confondu avec le plan P de joint des coquilles 2A et 2B indépendamment du mode de réalisation des déflecteurs.

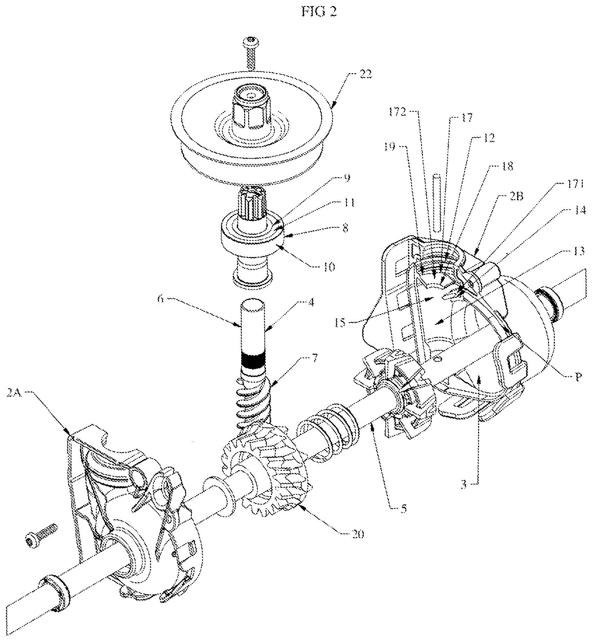

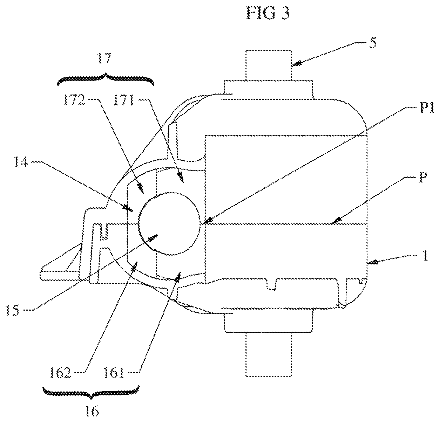

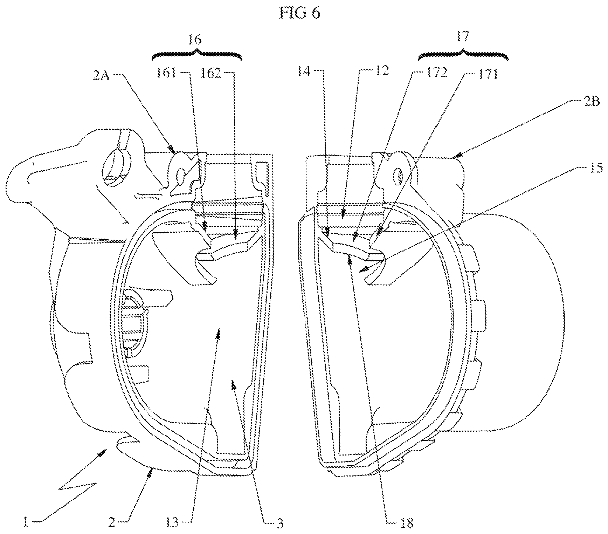

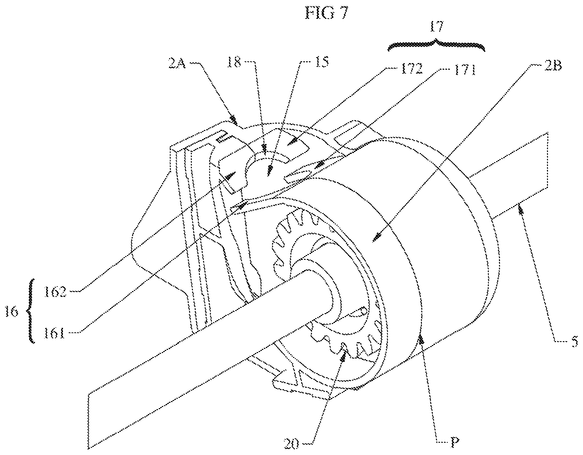

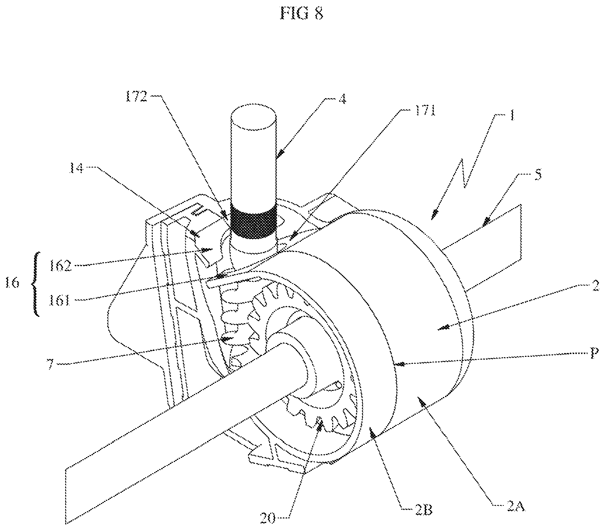

Dans l'exemple représenté aux figures 2 à 8, à nouveau chaque partie 16 ou 17 de barrière a deux déflecteurs. Les déflecteurs 161 et 162 de la partie 16 de barrière sont formés chacun au moins partiellement par une surface inclinée à pente descendante depuis le corps 2 du boîtier 1 en direction de l'arbre 4 d'entrée à l'état positionné verticalement de l'arbre 4 d'entrée avec le roulement 8 s'étendant au-dessus de la portion 7 filetée de l'arbre 4 d'entrée. Les surfaces inclinées convergent en direction l'une de l'autre. Ces déflecteurs 161 et 162 sont non jointifs et l'un des déflecteurs s'étend au moins partiellement au-dessus de l'autre des déflecteurs. Il en est de même des déflecteurs 162 et 172 de la partie 17 de barrière. Ainsi, à l'état assemblé des coquilles 2A et 2B par leur plan de joint, les déflecteurs 161 et 171 sont accolés et forment un plan incliné. Il en est de même des déflecteurs 161 et 172. Les deux plans inclinés s'étendent en regard l'un de l'autre et ont des pentes différentes ou identiques. Les deux plans inclinés forment vus en coupe, les branches non jointives d'un V avec l'une des branches se prolongeant au-delà de l'autre branche au niveau de la pointe du V.

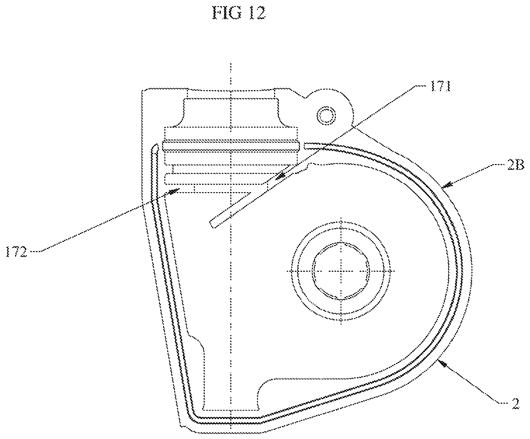

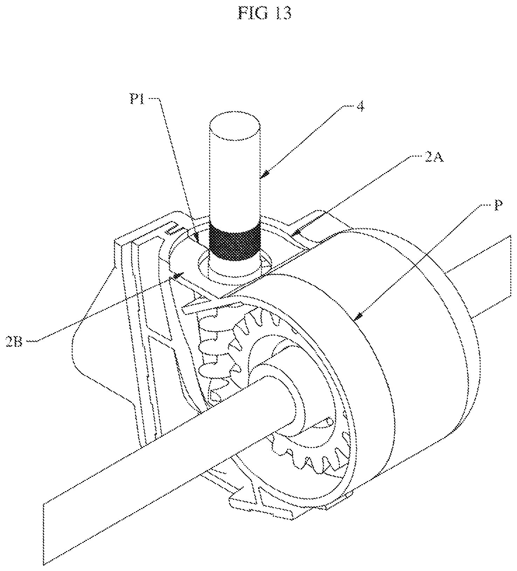

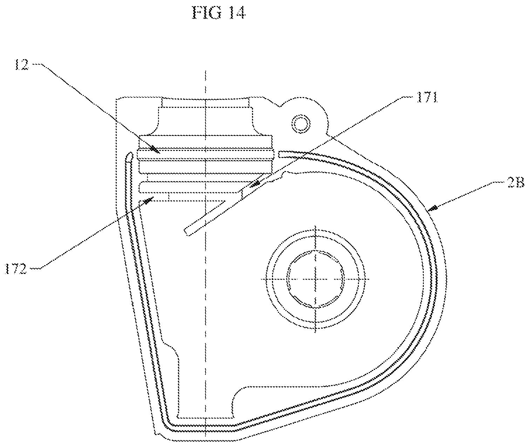

Enfin, l'exemple des figures 12 à 14 illustre un cas où à nouveau chaque partie 16 ou 17 de barrière a deux déflecteurs. Dans ce mode de réalisation, les déflecteurs 161 et 162 de la partie 16 de barrière sont formés au moins partiellement, l'un, représenté en 161 par une surface inclinée à pente descendante depuis le corps 2 du boîtier 1 en direction de l'arbre 4 d'entrée à l'état positionné verticalement de l'arbre 4 d'entrée avec le roulement 8 s'étendant au-dessus de la portion 7 filetée de l'arbre 4 d'entrée, l'autre, représenté en 162 aux figures par une surface s'étendant orthogonalement à l'axe longitudinal de l'arbre 4 d'entrée. Il en est de même respectivement des déflecteurs 171 et 172.

Indépendamment du mode de réalisation, au moins une partie de la surface inclinée à pente descendante depuis le corps du boîtier en direction de l'arbre d'entrée d'au moins l'un des déflecteurs à l'état positionné verticalement de l'arbre 4 d'entrée avec le roulement 8 s'étendant au-dessus de la portion 7 filetée de l'arbre 4 d'entrée forme un écran antiprojections disposé entre la roue 20 dentée et le roulement 8. Cet écran antiprojections s'étend dans un plan parallèle à un plan tangentant ladite roue 20 dentée.

Ainsi, dans les exemples représentés, c'est au moins une partie de la surface inclinée du déflecteur 171 de la partie 17 de barrière et au moins une partie de la surface inclinée du déflecteur 161 de la partie 16 de barrière qui forment un écran antiprojections interposé entre la roue 20 dentée et le roulement 8. Ces deux écrans sont coplanaires à l'état assemblé desdites coquilles.

Pour obtenir un passage 15 traversant de forme générale circulaire, chaque déflecteur présente, pour la délimitation du passage 15 traversant de la barrière 14, une partie 18 en arc de cercle de centre disposé sur l'axe longitudinal de l'arbre 4 d'entrée. Chaque déflecteur affecte une forme générale de secteur annulaire. Ce secteur annulaire, qui forme une partie de disque, est délimité par deux arcs de cercle concentriques. L'un des arcs de cercle forme la partie 18 en arc de cercle du déflecteur servant à la délimitation du passage 15 traversant de la barrière 14, l'autre arc de cercle, qui peut présenter une forme imparfaite pour s'adapter à la forme du corps de boîtier, forme une zone 19 de raccordement du déflecteur au corps 2 du boîtier 1. Cet autre arc de cercle peut être plus ou moins arrondi en fonction de la forme du boîtier.

A l'état assemblé des coquilles 2A et 2B du boîtier 1, le passage 15 traversant ménagé par la barrière 14 vu depuis l'extérieur du boîtier a une forme circulaire ou ovoïde et a, en projection orthogonale dans un plan perpendiculaire à l'axe longitudinal de l'arbre 4 d'entrée, une circonférence de dimension supérieure à la circonférence de l'arbre 4 d'entrée. Cette disposition permet d'éviter tout contact entre la portion 7 filetée de l'arbre 4 d'entrée et, de manière plus générale, entre l'arbre 4 d'entrée et la barrière 14 au cours de l'entraînement en rotation de l'arbre 4 d'entrée.

Le fonctionnement d'un tel boîtier de transmission est similaire à celui des boîtiers de transmission de l'état de la technique mais la présence de la barrière 14 permet de limiter des fuites de lubrifiant en direction de l'extérieur du boîtier.

## Revendications

1. Boîtier (1) de transmission présentant un corps (2) formé d'au moins deux coquilles (2A, 2B) délimitant, à l'état assemblé par un plan (P) de joint, une enceinte (3) apte à être remplie au moins partiellement de lubrifiant, ce boîtier (1) étant configuré pour recevoir, logés au moins partiellement à l'intérieur du boîtier (1), au moins un arbre (4) d'entrée rotatif présentant un axe longitudinal et un arbre (5) de sortie auquel le mouvement de rotation du ou d'au moins l'un des arbres (4) d'entrée est apte à être transmis, cet arbre (4) d'entrée rotatif comprenant une extrémité (6) dite menante accessible depuis l'extérieur du boîtier (1) pour permettre l'entraînement en rotation dudit arbre (4) d'entrée et une portion (7) filetée pour former une vis sans fin, ledit arbre (4) d'entrée portant un roulement (8) comprenant une bague (9) intérieure entourant ledit arbre (4) d'entrée et une bague (10) extérieure coaxiales et des organes (11) de roulement disposés entre lesdites bagues (9, 10), ledit roulement (8) étant disposé sur l'arbre (4) d'entrée entre la portion (7) filetée et l'extrémité (6) menante dudit arbre (4) d'entrée, ledit boîtier (1) ménageant à l'intérieur de l'enceinte (3) un emplacement (12) de réception de ce roulement (8) et un emplacement (13) de réception de la portion (7) filetée, **caractérisé en ce que** le boîtier (1) comprend une barrière (14) disposée entre lesdits emplacements (12, 13), cette barrière (14) s'étendant de manière continue ou discontinue autour dudit arbre (4) d'entrée en ménageant un passage (15) traversant formant le passage d'accès de l'arbre (4) d'entrée d'un emplacement (12) à l'autre (13), cette barrière (14) étant formée en au moins deux parties (16, 17) portées l'une (16), par l'une des coquilles (2A, 2B), l'autre (17), par l'autre des coquilles (2A, 2B), chaque partie (16, 17) de barrière étant réalisée d'une seule pièce avec la coquille (2A, 2B) associée, au moins l'une des parties (16 ; 17) de barrière étant conformée pour ménager un ou plusieurs déflecteurs (161, 162 ; 171, 172), le ou au moins l'un des déflecteurs (161, 162 ; 171, 172) étant formé au moins partiellement par une surface inclinée à pente descendante depuis le corps (2) du boîtier (1) en direction de l'arbre (4) d'entrée, à l'état positionné verticalement de l'arbre (4) d'entrée avec le roulement (8) s'étendant au-dessus de la portion (7) filetée de l'arbre (4) d'entrée.

2. Boîtier (1) de transmission selon la revendication 1, **caractérisé en ce que** lesdits déflecteurs (161, 162 ; 171, 172) d'au moins l'une des parties (16 ; 17) de barrière étant au nombre de deux et étant formés chacun au moins partiellement par une surface inclinée à pente descendante depuis le corps (2) du boîtier (1) en direction de l'arbre (4) d'entrée, à l'état positionné verticalement de l'arbre (4) d'entrée avec le roulement (8) s'étendant au-dessus de la portion (7) filetée de l'arbre (4) d'entrée, ces déflecteurs (161, 162 ; 171, 172) présentent une zone (163 ; 173) de jonction présentant un profil en V.

3. Boîtier (1) de transmission selon la revendication 1, **caractérisé en ce que** lesdits déflecteurs (161, 162 ; 171, 172) d'au moins l'une des parties (16 ; 17) de barrière étant au nombre de deux et étant formés chacun au moins partiellement par une surface inclinée à pente descendante depuis le corps (2) du boîtier (1) en direction de l'arbre (4) d'entrée, à l'état positionné verticalement de l'arbre (4) d'entrée avec le roulement (8) s'étendant au-dessus de la portion (7) filetée de l'arbre (4) d'entrée, ces déflecteurs (161, 162 ; 171, 172) sont non jointifs et l'un des déflecteurs (161, 162 ; 171, 172) s'étend au moins partiellement au-dessus de l'autre déflecteur.

4. Boîtier (1) de transmission selon la revendication 1, **caractérisé en ce que** lesdits déflecteurs (161, 162 ; 171, 172) d'au moins l'une des parties (16 ; 17) de barrière étant au nombre de deux et l'un des déflecteurs (161, 162 ; 171, 172) étant formé au moins partiellement par une surface inclinée à pente descendante depuis le corps (2) du boîtier (1) en direction de l'arbre (4) d'entrée à l'état positionné verticalement de l'arbre (4) d'entrée avec le roulement (8) s'étendant au-dessus de la portion (7) filetée de l'arbre (4) d'entrée, l'autre déflecteur est formé au moins partiellement par une surface s'étendant orthogonalement à l'axe longitudinal de l'arbre (4) d'entrée.

5. Boîtier (1) de transmission selon l'une des revendications 1 à 4, **caractérisé en ce qu'**au moins l'un des déflecteurs (161, 162 ; 171, 172) présente, pour la délimitation du passage (15) traversant de la barrière (14), une partie (18) en arc de cercle de centre disposé sur l'axe longitudinal de l'arbre (4) d'entrée.

6. Boîtier (1) de transmission selon l'une des revendications 1 à 5, **caractérisé en ce qu'**au moins l'un des déflecteurs (161, 162 ; 171, 172) forme un secteur annulaire, ce secteur annulaire qui forme une partie de disque étant délimité par deux arcs de cercle concentriques et deux rayons, l'un des arcs de cercle formant la partie (18) en arc de cercle du déflecteur servant à la délimitation du passage (15) traversant de la barrière (14), l'autre arc de cercle formant une zone (19) de raccordement du déflecteur au corps (2) du boîtier (1).

7. Boîtier (1) de transmission selon l'une des revendications 1 à 6, **caractérisé en ce que**, à l'état assemblé des coquilles (2A, 2B) du boîtier (1), le passage (15) traversant ménagé par la barrière (14), vu depuis l'extérieur du boîtier (1), a une forme circulaire ou ovoïde et a, en projection orthogonale dans un plan perpendiculaire à l'axe longitudinal de l'arbre (4) d'entrée, une circonférence de dimension supérieure à la circonférence de l'arbre (4) d'entrée.

8. Boîtier (1) de transmission selon l'une des revendications 1 à 7, **caractérisé en ce que** le plan (P) de joint des coquilles (2A, 2B) passe par l'axe longitudinal de l'arbre (4) d'entrée et s'étend perpendiculairement à l'arbre (5) de sortie.

9. Boîtier (1) de transmission selon la revendication 8, **caractérisé en ce que** la barrière (14) présente un plan (P1) de symétrie confondu avec le plan (P) de joint des coquilles (2A, 2B).

10. Boîtier (1) de transmission selon l'une des revendications 1 à 9, **caractérisé en ce que** le boîtier (1) est configuré pour recevoir une roue (20) dentée montée sur l'arbre (5) de sortie et en prise par engrènement avec la portion (7) filetée de l'arbre (4) d'entrée et **en ce qu'**au moins une partie de la surface inclinée à pente descendante depuis le corps (2) du boîtier (1) en direction de l'arbre (4) d'entrée d'au moins l'un des déflecteurs (161, 162 ; 171, 172), à l'état positionné verticalement de l'arbre (4) d'entrée avec le roulement s'étendant au-dessus de la portion filetée de l'arbre (4) d'entrée forme un écran antiprojections disposé entre la roue (20) dentée et le roulement (8) et s'étend dans un plan parallèle à un plan tangentant ladite roue (20) dentée.

11. Engin (21) roulant, tel qu'une tondeuse à gazon, **caractérisé en ce qu'**il est équipé d'un boîtier (1) de transmission conforme à l'une des revendications 1 à 10.

## Patentansprüche

1. Getriebegehäuse (1), welches einen Körper (2) aufweist, der von mindestens zwei Schalen (2A, 2B) gebildet wird, die im an einer Verbindungsebene (P) zusammengefügten Zustand einen Raum (3) begrenzen, der wenigstens teilweise mit Schmiermittel gefüllt werden kann, wobei dieses Gehäuse (1) dafür ausgelegt ist, Wellen aufzunehmen, die wenigstens teilweise im Inneren des Gehäuses (1) angeordnet sind, nämlich mindestens eine rotierende Eingangswelle (4), die eine Längsachse aufweist, und eine Abtriebswelle (5), auf welche die Drehbewegung der oder wenigstens einer der Eingangswellen (4) übertragbar ist, wobei diese rotierende Eingangswelle (4) ein sogenanntes führendes Ende (6) umfasst, das von außerhalb des Gehäuses (1) zugänglich ist, um den Drehantrieb der Eingangswelle (4) zu ermöglichen, und einen Gewindeabschnitt (7), um eine Schnecke zu bilden, wobei die Eingangswelle (4) ein Wälzlager (8) trägt, das einen die Eingangswelle (4) umgebenden Innenring (9) und einen Außenring (10), die koaxial sind, sowie zwischen diesen Ringen (9, 10) angeordnete Wälzelemente (11) umfasst, wobei das Wälzlager (8) auf der Eingangswelle (4) zwischen dem Gewindeabschnitt (7) und dem führenden Ende (6) der Eingangswelle (4) angeordnet ist, wobei das Gehäuse (1) im Inneren des Raumes (3) einen Ort (12) für die Aufnahme dieses Wälzlagers (8) und einen Ort (13) für die Aufnahme des Gewindeabschnitts (7) vorsieht, **dadurch gekennzeichnet, dass** das Gehäuse (1) eine Barriere (14) umfasst, die zwischen den Orten (12, 13) angeordnet ist, wobei sich diese Barriere (14) durchgehend oder nicht durchgehend um die Eingangswelle (4) herum erstreckt und dabei einen Durchgang (15) ausbildet, der den Zugangsweg der Eingangswelle (4) von einem Ort (12) zum anderen (13) bildet, wobei diese Barriere (14) von mindestens zwei Teilen (16, 17) gebildet wird, von denen einer (16) von einer der Schalen (2A, 2B) und der andere (17) von der anderen der Schalen (2A, 2B) getragen wird, wobei jeder Barrierenteil (16, 17) mit der zugeordneten Schale (2A, 2B) aus einem Stück hergestellt ist, wobei wenigstens einer der Barrierenteile (16; 17) dafür ausgebildet ist, eine oder mehrere Ablenkplatten (161, 162; 171, 172) vorzusehen, wobei die oder wenigstens eine der Ablenkplatten (161, 162; 171, 172), im vertikal positionierten Zustand der Eingangswelle (4) mit dem sich oberhalb des Gewindeabschnitts (7) der Eingangswelle (4) erstreckenden Wälzlager (8), wenigstens teilweise von einer geneigten Fläche mit einem Gefälle vom Körper (2) des Gehäuses (1) in Richtung der Eingangswelle (4) gebildet wird.

2. Getriebegehäuse (1) nach Anspruch 1, **dadurch gekennzeichnet, dass** die Ablenkplatten (161, 162; 171, 172) wenigstens eines der Barrierenteile (16; 17) zwei an der Zahl sind und, im vertikal positionierten Zustand der Eingangswelle (4) mit dem sich oberhalb des Gewindeabschnitts (7) der Eingangswelle (4) erstreckenden Wälzlager (8), jeweils wenigstens teilweise von einer geneigten Fläche mit einem Gefälle vom Körper (2) des Gehäuses (1) in Richtung der Eingangswelle (4) gebildet werden, wobei diese Ablenkplatten (161, 162; 171, 172) einen Verbindungsbereich (163; 173) aufweisen, der ein V-förmiges Profil aufweist.

3. Getriebegehäuse (1) nach Anspruch 1, **dadurch gekennzeichnet, dass** die Ablenkplatten (161, 162; 171, 172) wenigstens eines der Barrierenteile (16; 17) zwei an der Zahl sind und, im vertikal positionierten Zustand der Eingangswelle (4) mit dem sich oberhalb des Gewindeabschnitts (7) der Eingangswelle (4) erstreckenden Wälzlager (8), jeweils wenigstens teilweise von einer geneigten Fläche mit einem Gefälle vom Körper (2) des Gehäuses (1) in Richtung der Eingangswelle (4) gebildet werden, wobei diese Ablenkplatten (161, 162; 171, 172) nicht aneinander stoßend sind und eine der Ablenkplatten (161, 162; 171, 172) sich wenigstens teilweise oberhalb der anderen Ablenkplatte erstreckt.

4. Getriebegehäuse (1) nach Anspruch 1, **dadurch gekennzeichnet, dass** die Ablenkplatten (161, 162; 171, 172) wenigstens eines der Barrierenteile (16; 17) zwei an der Zahl sind und eine der Ablenkplatten (161, 162; 171, 172), im vertikal positionierten Zustand der Eingangswelle (4) mit dem sich oberhalb des Gewindeabschnitts (7) der Eingangswelle (4) erstreckenden Wälzlager (8), wenigstens teilweise von einer geneigten Fläche mit einem Gefälle vom Körper (2) des Gehäuses (1) in Richtung der Eingangswelle (4) gebildet wird und die andere Ablenkplatte wenigstens teilweise von einer Fläche gebildet wird, die sich orthogonal zur Längsachse der Eingangswelle (4) erstreckt.

5. Getriebegehäuse (1) nach einem der Ansprüche 1 bis 4, **dadurch gekennzeichnet, dass** wenigstens eine der Ablenkplatten (161, 162; 171, 172) zur Begrenzung des Durchgangs (15) der Barriere (14) einen kreisbogenförmigen Teil (18) mit einem auf der Längsachse der Eingangswelle (4) angeordneten Mittelpunkt aufweist.

6. Getriebegehäuse (1) nach einem der Ansprüche 1 bis 5, **dadurch gekennzeichnet, dass** wenigstens eine der Ablenkplatten (161, 162; 171, 172) einen Ringsektor bildet, wobei dieser Ringsektor, der einen Scheibenteil bildet, von zwei konzentrischen Kreisbögen und zwei Radien begrenzt wird, wobei einer der Kreisbögen den kreisbogenförmigen Teil (18) der zur Begrenzung des Durchgangs (15) der Barriere (14) dienenden Ablenkplatte bildet und der andere Kreisbogen einen Anschlussbereich (19) der Ablenkplatte an den Körper (2) des Gehäuses (1) bildet.

7. Getriebegehäuse (1) nach einem der Ansprüche 1 bis 6, **dadurch gekennzeichnet, dass** im zusammengefügten Zustand der Schalen (2A, 2B) des Gehäuses (1) der von der Barriere (14) ausgebildete Durchgang (15), von der Außenseite des Gehäuses (1) her gesehen, eine kreisförmige oder ovale Form hat und in der orthogonalen Projektion in einer zur Längsachse der Eingangswelle (4) senkrechten Ebene einen Umfang hat, der größer als der Umfang der Eingangswelle (4) ist.

8. Getriebegehäuse (1) nach einem der Ansprüche 1 bis 7, **dadurch gekennzeichnet, dass** die Verbindungsebene (P) der Schalen (2A, 2B) durch die Längsachse der Eingangswelle (4) verläuft und sich senkrecht zur Abtriebswelle (5) erstreckt.

9. Getriebegehäuse (1) nach Anspruch 8, **dadurch gekennzeichnet, dass** die Barriere (14) eine Symmetrieebene (P1) aufweist, die mit der Verbindungsebene (P) der Schalen (2A, 2B) zusammenfällt.

10. Getriebegehäuse (1) nach einem der Ansprüche 1 bis 9, **dadurch gekennzeichnet, dass** das Gehäuse (1) dafür ausgelegt ist, ein Zahnrad (20) aufzunehmen, das auf der Abtriebswelle (5) gelagert ist und mit dem Gewindeabschnitt (7) der Eingangswelle (4) in Verzahnungseingriff steht, und dadurch, dass, im vertikal positionierten Zustand der Eingangswelle (4) mit dem sich oberhalb des Gewindeabschnitts der Eingangswelle (4) erstreckenden Wälzlager, wenigstens ein Teil der geneigten Fläche wenigstens einer der Ablenkplatten (161, 162; 171, 172) mit einem Gefälle vom Körper (2) des Gehäuses (1) in Richtung der Eingangswelle (4) einen Spritzschutzschirm bildet, der zwischen dem Zahnrad (20) und dem Wälzlager (8) angeordnet ist und sich in einer Ebene erstreckt, die zu einer das Zahnrad (20) tangierenden Ebene parallel ist.

11. Fahrbares Gerät (21), wie etwa ein Rasenmäher, **dadurch gekennzeichnet, dass** es mit einem Getriebegehäuse (1) gemäß einem der Ansprüche 1 bis 10 ausgestattet ist.

## Claims

1. A transmission housing (1) comprising a body (2) formed by at least two shells (2A, 2B) that when assembled about a parting line (P) form an enclosure (3) that can be at least partially filled with lubricant, this housing (1) being configured to receive, seated at least partially inside the housing (1), at least one rotary input shaft (4) with a longitudinal axis and an output shaft (5) to which the rotational movement of the or of the at least one of the input shafts (4) can be transmitted, this rotary input shaft (4) comprising a drive end (6) that is accessible from outside the housing (1) to enable said input shaft (4) to be driven in rotation and a threaded portion (7) to form a worm screw, said input shaft (4) having a bearing (8) comprising a coaxial inner ring (9) surrounding said input shaft (4) and a coaxial outer ring (10), and bearing members (11) arranged between said rings (9, 10), said bearing (8) being arranged on the input shaft (4) between the threaded portion (7) and the drive end (6) of said input shaft (4), said housing (1) including a space (12) for receiving this bearing (8) and a space (13) for receiving the threaded portion (7) inside the enclosure (3), **characterized in that** the housing (1) comprises a barrier (14) arranged between said spaces (12, 13), this barrier (14) extending continuously or discontinuously about said input shaft (4) forming an access passage (15) for the input shaft (4) from one space (12) to the other space (13), this barrier (14) comprising at least two parts (16, 17), one of said parts (16) being carried by one of the shells (2A, 2B) and the other of said parts (17) being carried by the other of the shells (2A, 2B), each barrier part (16, 17) being integral with the related shell (2A, 2B), at least one of the barrier parts (16; 17) being shaped to form one or more deflectors (161, 162; 171, 172), the or at least one of the deflectors (161, 162; 171, 172) being at least partially formed by a surface sloping downwards from the body (2) of the housing (1) towards the input shaft (4), when the input shaft (4) is positioned vertically and the bearing (8) is arranged above the threaded portion (7) of the input shaft (4).

2. The transmission housing (1) as claimed in claim 1, **characterized in that** there are two such deflectors (161, 162; 171, 172) of at least one of the barrier parts (16; 17), each of said deflectors is formed at least partially by a surface sloping downwards from the body (2) of the housing (1) towards the input shaft (4), when the input shaft (4) is positioned vertically and the bearing (8) is arranged above the threaded portion (7) of the input shaft (4), and these deflectors (161, 162; 171, 172) have a joining zone (163; 173) with a V-shaped profile.

3. The transmission housing (1) as claimed in claim 1, **characterized in that** there are two such deflectors (161, 162; 171, 172) of at least one of the barrier parts (16; 17), each of said deflectors is formed at least partially by a surface sloping downwards from the body (2) of the housing (1) towards the input shaft (4), when the input shaft (4) is positioned vertically and the bearing (8) is arranged above the threaded portion (7) of the input shaft (4), these deflectors (161, 162; 171, 172) are not joined, and one of the deflectors (161, 162; 171, 172) is arranged at least partially above the other deflector.

4. The transmission housing (1) as claimed in claim 1, **characterized in that** there are two such deflectors (161, 162; 171, 172) of at least one of the barrier parts (16; 17), one of the deflectors (161, 162; 171, 172) is formed at least partially by a surface sloping downwards from the body (2) of the housing (1) towards the input shaft (4), when the input shaft (4) is positioned vertically and the bearing (8) is arranged above the threaded portion (7) of the input shaft (4), and the other deflector is formed at least partially by a surface extending orthogonally to the longitudinal axis of the input shaft (4).

5. The transmission housing (1) as claimed in one of claims 1 to 4, **characterized in that** at least one of the deflectors (161, 162; 171, 172) has a circular arc portion (18) centered on the longitudinal axis of the input shaft (4) to delimit the passage (15) through the barrier (14).

6. The transmission housing (1) as claimed in one of claims 1 to 5, **characterized in that** at least one of the deflectors (161, 162; 171, 172) forms an annular sector, this annular sector, which forms a disk portion, being delimited by two concentric circular arcs and two radiuses, one of the circular arcs forming the circular arc portion (18) of the deflector used to delimit the passage (15) through the barrier (14), and the other circular arc forming a zone (19) for connecting the deflector to the body (2) of the housing (1).

7. The transmission housing (1) as claimed in one of claims 1 to 6, **characterized in that**, when the shells (2A, 2B) of the housing (1) are assembled, the passage (15) through the barrier (14) has a circular or ovoid shape when viewed from the outside of the housing (1) and, in an orthogonal projection in a plane perpendicular to the longitudinal axis of the input shaft (4), has a circumference larger than the circumference of the input shaft (4).

8. The transmission housing (1) as claimed in one of claims 1 to 7, **characterized in that** the parting line (P) of the shells (2A, 2B) passes through the longitudinal axis of the input shaft (4) and extends perpendicular to the output shaft (5).

9. The transmission housing (1) as claimed in claim 8, **characterized in that** the barrier (14) has a plane of symmetry (P1) that coincides with the parting line (P) of the shells (2A, 2B).

10. The transmission housing (1) as claimed in one of claims 1 to 9, **characterized in that** the housing (1) is configured to receive a gear wheel (20) mounted on the output shaft (5) and meshed with the threaded portion (7) of the input shaft (4), and **in that** at least a portion of the surface sloping downwards from the body (2) of the housing (1) towards the input shaft (4) of at least one of the deflectors (161, 162; 171, 172), when the input shaft (4) is positioned vertically and the bearing is arranged above the threaded portion of the input shaft (4) forms a splash guard between the gear wheel (20) and the bearing (8) and extends in a plane parallel to a plane tangential to said gear wheel (20).

11. A wheeled vehicle (21) such as a lawnmower, **characterized in that** it is provided with a transmission housing (1) as claimed in one of claims 1 to 10.
